# EUROPEAN PATENT APPLICATION

(11) **EP 4 768 095 A1**
(43) Date of publication of application: **01.07.2026**
(21) Application number: 25182213.6
(22) Date of filing: 12.06.2025
(51) Int. Cl.: A63B 41/12, B25F 5/00, B60S 5/04, F04B 35/04, F21L 4/00, F04B 35/06, F21V 33/00, A63H 27/10

(54) **INFLATOR**

(30) Priority: 30.12.2024 CN 202411978288; 30.12.2024 CN 202411975950
(71) Applicant: Nanjing Chervon Industry Co., Ltd., Nanjing, Jiangsu 211106 (CN)
(72) Inventor: LI, Siyi, Nanjing (CN); XU, Kemeng, Nanjing (CN); JU, Jiadi, Nanjing (CN); ZHANG, Changrong, Nanjing (CN)
(74) Representative: Sun, Yiming

(57) **Abstract**

An inflator includes a motor, a power mechanism, at least one air vent, and a main housing. The power mechanism is driven by the motor and configured to generate airflow. The air vent is connected to a flexible duct for air intake and/or air discharge to allow the airflow to flow. The main housing accommodates the motor and the power mechanism and has a battery coupling portion, where a battery pack that provides a power supply for the motor is capable of being detached from or mounted to the battery coupling portion. The main housing further has a first coupling portion configured to detachably connect an illumination device. The illumination device is capable of illuminating a working region of the inflator.

## Description

### TECHNICAL FIELD

The present application relates to an inflator and, in particular, to an inflator, an inflator system, and an illumination device adapted to work of an inflator.

### BACKGROUND

In the related art, an inflator, also referred to as an air pump, is used for deflating or inflating inflatable structures such as tires, balls, or inflatable boats. In the related art, the inflator includes a motor, a power mechanism, and an air cartridge. The motor drives the power mechanism to generate airflow, and the airflow flows through the air cartridge. The inflator is generally suitable for use during the daytime or at places with illumination, and usage scenarios of the inflator are thus limited.

This section provides background information related to the present application which is not necessarily prior art.

### SUMMARY

An object of the present application is to solve or at least alleviate part or all of the preceding problems. Therefore, an object of the present application is to provide an inflator, an inflator system, and an illumination device adapted to work of an inflator.

The present application adopts the technical solutions below.

An inflator includes: a motor; a power mechanism driven by the motor and configured to generate airflow; at least one air vent connected to a flexible duct for air intake and/or air discharge to allow the airflow to flow; and a main housing accommodating the motor and the power mechanism and having a battery coupling portion, where a battery pack that provides a power supply for the motor is capable of being detached from or mounted to the battery coupling portion. The main housing further has a first coupling portion configured to detachably connect an illumination device. The illumination device is capable of illuminating a working region of the inflator.

In some examples, the illumination device includes a light-emitting portion and a battery set for powering the light-emitting portion.

In some examples, the first coupling portion includes a first interface, the illumination device includes a second interface, and the battery pack charges the battery set of the illumination device through the first interface and the second interface.

In some examples, a current transmission manner between the first interface and the second interface is one of a Type-C interface, a universal serial bus (USB) interface, contact charging, or wireless charging.

In some examples, the first coupling portion further includes an adaptation portion configured to lock the illumination device onto the inflator.

In some examples, the illumination device is configured to be capable of outputting 300 or more lumens of light.

In some examples, the illumination device further includes a display region configured to indicate a state of charge and/or a working state and/or a charging state of the illumination device.

In some examples, the illumination device has a stepless brightness adjustment function.

In some examples, the illumination device has a color temperature adjustment function.

In some examples, the inflator has a low-pressure working mode and a high-pressure working mode.

In some examples, the power mechanism includes a compression mechanism, where the compression mechanism works when the inflator is in the high-pressure working mode.

In some examples, the power mechanism includes a rotation mechanism, where the rotation mechanism works when the inflator is in the low-pressure working mode.

In some examples, the inflator further includes an operation portion disposed on the main housing, where the operation portion is configured to be capable of adjusting a working mode of the inflator.

In some examples, the illumination device further includes a magnetically attractive portion having a magnetic property.

In some examples, the illumination device and the battery pack are disposed at two end portions of the main housing, respectively.

An inflator system includes: an inflator including a motor and a power mechanism driven by the motor to generate airflow; a power supply device configured to provide a power supply for the motor; and an illumination device including a light-emitting portion configured to illuminate a working region of the inflator. The inflator has a first coupling portion configured to detachably connect the illumination device. The illumination device further includes a rechargeable battery set. The battery set is capable of providing electrical energy for the light-emitting portion when the illumination device is in a mounted state or a detached state.

In some examples, the power supply device is capable of providing a charging current for the battery set of the illumination device.

An illumination device adapted to work of an inflator is provided. The inflator includes: a motor and a power mechanism driven by the motor to generate airflow; a power supply device configured to provide a power supply for the motor; and a first interface adapted to the illumination device. The illumination device includes: a light-emitting portion and a battery set for powering the light-emitting portion, where the light-emitting portion is configured to illuminate a working region of the inflator; and a second interface adapted to the inflator. The first interface and the second interface are capable of being electrically connected to each other to allow a current to flow from the first interface to the second interface.

In some examples, the illumination device is detachably connected to the inflator.

### BRIEF DESCRIPTION OF DRAWINGS

FIG. 1 is a schematic view showing the state in which an illumination device is mounted to an inflator from an angle of view;
FIG. 2 is a schematic view showing the state in which an illumination device is mounted to an inflator from another angle of view;
FIG. 3 is a schematic view showing the state in which an illumination device is detached from an inflator;
FIG. 4 is a schematic view of an illumination device from one angle of view;
FIG. 5 is a schematic view of an illumination device from another angle of view;
FIG. 6 is a structural view showing a motor and a power mechanism in an inflator;
FIG. 7 is a structural view of the bottom of the inflator in FIG. 1;
FIG. 8 is a structural view of an inflator in another example of the present application; and
FIG. 9 is a structural view of the inflator in FIG. 8 from another angle of view.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

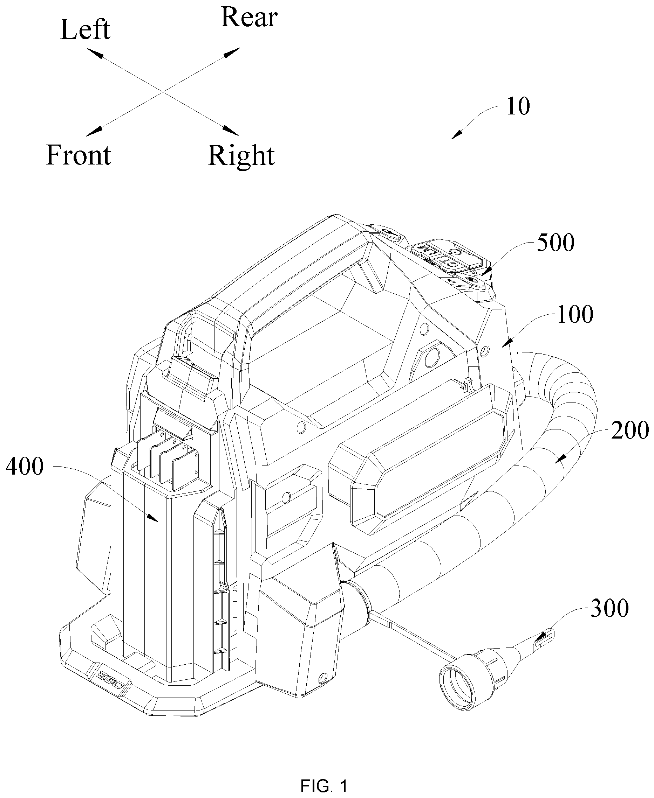

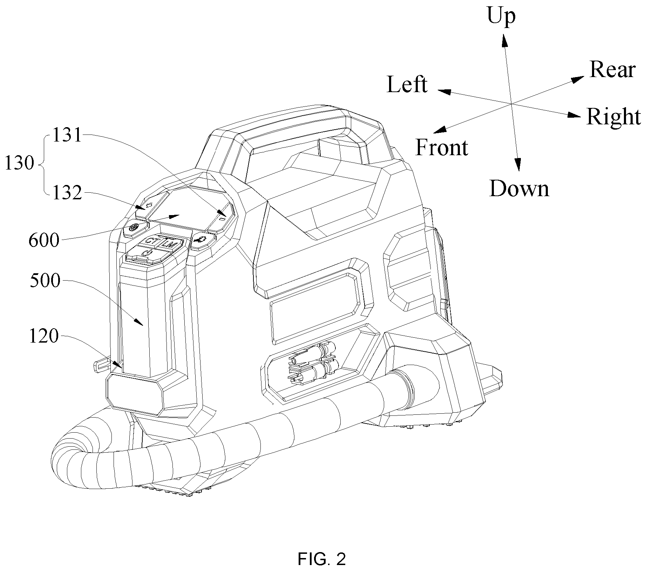

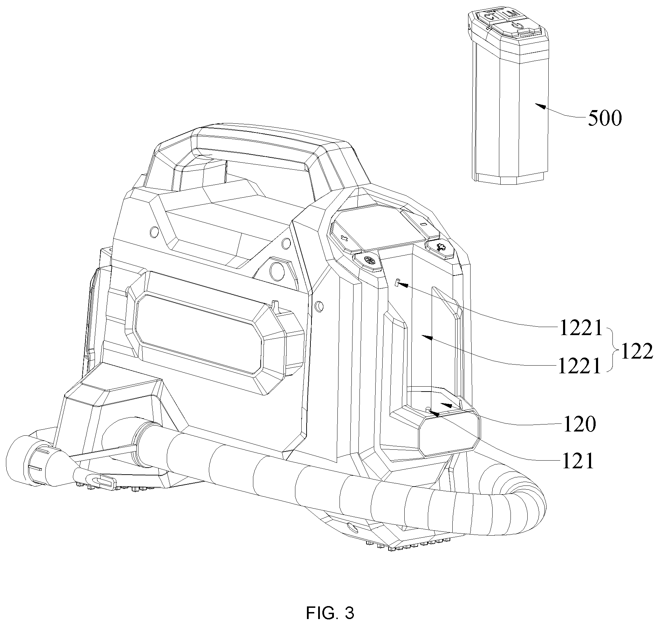

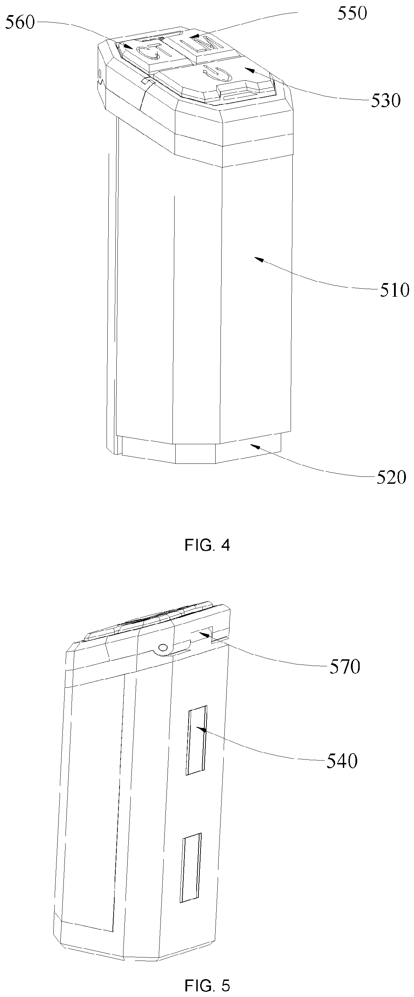

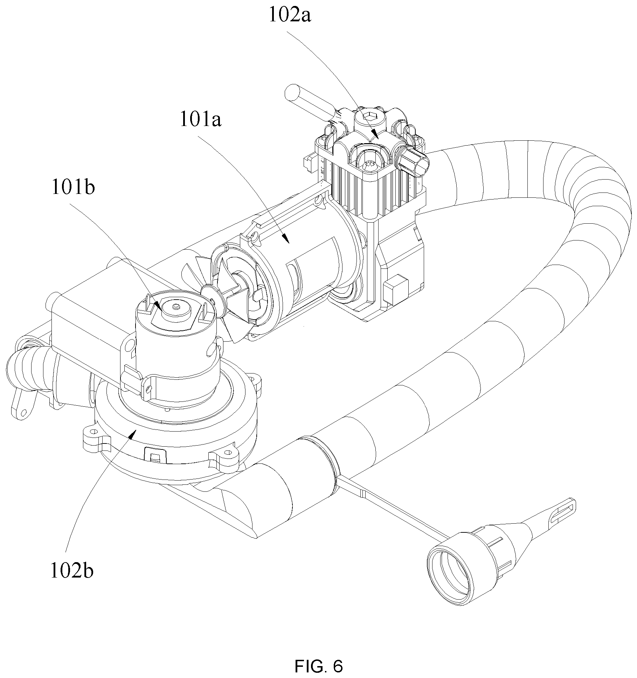

As shown in FIGS. 1 to 6, this example provides an inflator. The inflator includes a motor, a power mechanism, at least one air vent 300, a flexible duct 200, a main housing 100, and a battery pack interface 400. The battery pack interface 400 is configured to be connected to a battery pack. The battery pack provides a power supply for the motor. The motor drives the power mechanism to generate airflow. The air vent 300 is connected to the flexible duct 200 for air intake and/or air discharge. The flexible duct 200 is connected to the power mechanism so that the airflow generated by the power mechanism flows through the flexible duct 200. The air vent 300 is configured to be connected to an inflatable structure, such as a tire, for air extraction or air inflation. In some examples, multiple air vents 300 are provided. Accordingly, multiple flexible ducts 200 are provided. Each of the air vents 300 is connected to the power mechanism through a respective flexible duct 200. The number of air vents 300 is increased so that multiple inflatable structures can be inflated simultaneously, thereby improving operation efficiency.

The motor and the power mechanism are accommodated in the main housing 100. Specifically, the motor and the power mechanism may be accommodated in the main housing 100 partially or completely. The main housing 100 also has the battery pack interface 400, where the battery pack is detached from or mounted to the battery pack interface 400. The battery pack is configured as a detachable connection structure so that a user conveniently replaces the battery pack whenever necessary, thereby ensuring that the inflator 10 can be used for a long time. Additionally, when the battery pack becomes unusable, the battery pack is replaced so that the service life of the inflator 10 is prolonged, thereby avoiding the waste caused by the replacement of the entire inflator 10.

The main housing 100 further has a first coupling portion 120. The first coupling portion 120 is configured to detachably connect an illumination device 500. The illumination device 500 can illuminate a working region of the inflator 10. When the inflator 10 is used at night or at a poorly illuminated place, the illumination device 500 provides illumination so that it is convenient to operate the inflator 10 to work. The illumination device 500 is configured as the detachable connection structure so that the inflator 10 can be used in more scenarios, thereby enhancing the applicability of the inflator 10 and avoiding limitations on usage scenarios. For example, when the user does not use the inflator 10, the illumination device 500 may be removed and magnetically attached to other equipment to provide additional illumination angles.

In some examples, the illumination device 500 includes a light-emitting portion 510 and a battery set 520 for powering the light-emitting portion 510. After being detached, the illumination device 500 can be independently used in other scenarios such as emergency rescue, construction sites, and outdoor activities. Thus, the illumination device 500 can be used in more scenarios, thereby improving the applicability and flexibility of the illumination device 500. The light-emitting portion 510 may be a light-emitting element, for example, an LED lamp, an incandescent lamp, or a fluorescent lamp.

In some examples, the first coupling portion 120 includes a first interface 121, and the illumination device 500 includes a second interface. The battery pack mounted at the battery pack interface 400 charges the battery set 520 of the illumination device 500 through the first interface 121 and the second interface so that light emission duration of the illumination device 500 is ensured. A current transmission manner between the first interface 121 and the second interface is one of a Type-C interface, a USB interface, contact charging, or wireless charging, which can be selected as required. In other examples, the battery pack mounted at the battery pack interface 400 is provided with a first interface 121, and an external power supply is provided with a first interface 121. The second interface can be selectively connected to the first interface 121 of any one of the battery pack, the external power supply, and the first coupling portion 120. That is, the illumination device 500 can be directly charged through the battery pack mounted at the battery pack interface 400 or the external power supply. A variety of alternative solutions are provided. The solutions are selected as required and convenient to use.

The first coupling portion 120 further includes an adaptation portion 122 configured to lock the illumination device 500 onto the inflator 10, ensuring the mounting reliability of the two. In some examples, the adaptation portion 122 includes an insertion slot 1222 formed on the main housing 100 and a catch 1221 provided on a wall of the insertion slot 1222. A locking slot 570 is provided on the illumination device 500. The illumination device 500 is inserted into the insertion slot 1222, and the catch 1221 engages with the locking slot 570, thereby locking the illumination device 500 in the insertion slot 1222. In an example, the illumination device 500 is inserted downward into the insertion slot 1222 to be circumferentially limited. The illumination device 500 is vertically limited through the engagement between the catch 1221 and the locking slot 570. Thus, the illumination device 500 is locked. In other examples, the illumination device 500 may be inserted obliquely or horizontally into the main housing 100. The first interface 121 and the second interface are connected to each other through insertion. The first interface 121 is provided at the bottom of the insertion slot 1222, and the second interface is provided at the bottom of the illumination device 500. The first interface 121 and the second interface are automatically inserted as the illumination device 500 is inserted into the insertion slot 1222.

The illumination device 500 further includes magnetically attractive portions 540. The magnetically attractive portions 540 have a magnetic property and magnet structures. The main housing 100 is made of a metal material such as iron or steel. Alternatively, the main housing 100 is made of a material such as plastic, and a metal material such as iron or steel is mounted in the insertion slot 1222 of the main housing 100. The illumination device 500 is magnetically attracted to the inside of the insertion slot 1222 through the magnetically attractive portions 540, further ensuring the stability of the connection between the two. Additionally, when used on other occasions or on other equipment, the illumination device 500 can also be magnetically attracted to any other structure through the magnetically attractive portions 540, ensuring the mounting stability of the illumination device 500.

The illumination device 500 includes a mounting base. The battery set 520, the light-emitting portion 510, the locking slot 570, and the magnetically attractive portions 540 are each disposed on the mounting base. The light-emitting portion 510 is mounted on the front side of the mounting base, the battery set 520 is mounted at the bottom of the light-emitting portion 510, the locking slot 570 is provided on the rear side of the light-emitting portion 510, and the magnetically attractive portions 540 are disposed on the rear side of the light-emitting portion 510 or the left and right sides of the light-emitting portion 510. In some examples, the light-emitting portion 510 may be arranged on the front side of the illumination device and the left and right sides of the illumination device. The light-emitting area of the light-emitting portion should be designed according to an illumination working condition.

In some examples, the illumination device 500 is configured to be capable of outputting 300 or more lumens of light. In some examples, the illumination device 500 may output 100 lumens, 200 lumens, 400 lumens, or 500 lumens of light. In some examples, the illumination device 500 is configured to be capable of outputting 600 or more lumens of light. The higher the value is, the brighter the light is. The illumination device 500 may output 600 lumens, 700 lumens, 800 lumens, 900 lumens, 1000 lumens, 1100 lumens, 1200 lumens, 1300 lumens, 1400 lumens, 1500 lumens, or 1600 lumens of light, which is not limited. In some examples, the brightness of the illumination device 500 is adjustable, and the user can adjust the brightness of the illumination device 500 according to a working condition. In some examples, the illumination device 500 can automatically adjust the brightness according to an environmental condition. The preceding brightness may be understood as a lumen value.

The illumination device 500 further includes a display region 530 configured to indicate a state of charge and/or a working state and/or a charging state of the illumination device 500. Thus, it is convenient for the user to distinguish whether the illumination device 500 is in the working state or the charging state. In addition, it is convenient for the user to view a battery level, or the user can distinguish a low battery level, a fully charged state, and a state of being charged. The preceding can each serve as a prompt. The illumination device 500 can perform at least one of a safety indication, a fault indication, a battery level prompt of a battery pack, or image projection so that it is convenient for the user to view a current working state of the illumination device 500. In some examples, the display region 530 is a display screen disposed on the mounting base. The display screen is configured to display a current state of charge, a current working state, and a current charging state. In some examples, the safety indication, the fault indication, the battery level prompt of a battery pack, and the image projection are all displayed through the display screen. The display screen is disposed at the top of the illumination device 500 for convenience of view. In addition, since the working region is generally located around or below the inflator 10, the display screen is disposed above the light-emitting portion 510 to avoid affecting illumination.

The illumination device 500 has a stepless brightness adjustment function and correspondingly has a brightness adjustment portion 550. The brightness is adjusted through the operation of the brightness adjustment portion 550. The illumination device 500 has a color temperature adjustment function and correspondingly has a color temperature adjustment portion 560. A color temperature is adjusted through the operation of the color temperature adjustment portion 560. Both the brightness adjustment portion 550 and the color temperature adjustment portion 560 are disposed at the top of the illumination device 500 for convenience of operation.

The illumination device 500 and the battery pack interface 400 are disposed at two end portions of the main housing 100, respectively. In an example, the battery pack interface 400 and the illumination device 500 are disposed on the front and rear sides of the main housing 100. In other examples, the battery pack interface 400 and the illumination device 500 may be disposed on the left and right sides of the main housing 100 or may be disposed on the same side. The battery pack interface 400 may be inserted obliquely, vertically, or horizontally into the main housing 100 for convenience of mounting and detachment. It is to be noted that the preceding positional relationship between the battery pack interface 400 and the illumination device 500 may be understood as the positional relationship between the battery pack mounted at the battery pack interface 400 and the illumination device 500.

In some examples, the inflator 10 has a low-pressure working mode and a high-pressure working mode so that the inflator 10 can perform inflation in various scenarios with good adaptability and flexibility. In the high-pressure inflation mode, the working pressure is above 100 PSI (pound per square inch) and is typically used for an object requiring a relatively high inflation pressure, such as an automobile tire, a bicycle tire, a hovercraft, and a basketball. In the low-pressure working mode, the working pressure is below 100 PSI (pound per square inch) and is applicable to objects requiring a relatively low inflation pressure, such as an air mattress, a swim ring, and a balloon. The inflator 10 further includes an operation portion 130 disposed on the main housing 100. The operation portion is operated by the user to adjust the working mode of the inflator 10. The operation portion 130 may be a touchscreen, a knob, or a button. For example, two buttons including a high-pressure working mode portion 131 and a low-pressure working mode portion 132 are provided. One of the buttons is pressed such that the inflator 10 can work in the corresponding mode.

The power mechanism is a compression mechanism 102a, such as a compressor or an electric pump. The compression mechanism 102a is driven by a first motor 101a. The power mechanism is a rotation mechanism 102b, such as a fan. The rotation mechanism 102b is driven by a second motor 101b.

When the inflator 10 is in the high-pressure working mode, the first motor 101a drives the compression mechanism 102a to work. The compression mechanism 102a is typically a piston compression mechanism or a centrifugal compression mechanism. A pair of pistons exists in the compression mechanism 102a and continuously moves up and down during work to compress gases. The compressor is also provided with a pressure valve. When a gas pressure reaches a preset value, the pressure valve automatically opens to release high-pressure gases into the inflatable structure. The power mechanism includes the rotation mechanism 102b. When the inflator 10 is in the low-pressure working mode, the second motor 101b drives the rotation mechanism 102b to work and rotate, thereby compressing the gases and filling the compressed gases into the inflatable structure. In some examples, the inflator 10 can also have an extraction function in the low-pressure working mode. For example, the inflator 10 quickly extracts gases from an air bed for the storage of the air bed.

This example provides the inflator. The inflator includes the motor, the power mechanism, the main housing 100, and the battery pack interface 400 configured for mounting and detaching the battery pack. The battery pack provides the power supply for the motor. The motor drives the power mechanism to generate airflow for inflating or deflating the inflatable structure, such as a tire. The main housing 100 accommodates the motor and the power mechanism. The battery pack is configured as the detachable connection structure so that the user conveniently replaces the battery pack whenever necessary, thereby ensuring that the inflator 10 can be used for a long time. Additionally, when the battery pack becomes unusable, the battery pack is replaced so that the service life of the inflator 10 is prolonged, thereby avoiding the waste caused by the replacement of the entire inflator 10. The inflator 10 also includes the illumination device 500. The illumination device 500 is configured to be capable of outputting 300 or more lumens of light. The illumination device 500 can illuminate the working region of the inflator 10. When the inflator 10 is used at night or at the poorly illuminated place, the illumination device 500 provides the illumination so that it is convenient to operate the inflator 10 to work. The inflator 10 can be used in more scenarios, thereby enhancing the applicability of the inflator 10 and avoiding the limitations on the usage scenarios. The light outputted by the illumination device 500 is brighter when the value is higher, so as to avoid insufficient brightness due to an excessively low value. In some examples, the illumination device 500 may output 100 or more lumens of light. In some examples, the illumination device 500 may output 200 or more lumens of light. In some examples, the illumination device 500 may output 300 or more lumens of light. The illumination device 500 may output 600 lumens, 700 lumens, 800 lumens, 900 lumens, 1000 lumens, 1100 lumens, 1200 lumens, 1300 lumens, 1400 lumens, 1500 lumens, or 1600 lumens of light, which is not limited.

The total light-emitting area of the illumination device 500 is not less than 0.1 square meters, For example, the total light-emitting area of the illumination device 500 is 0.1 square meters, 0.15 square meters, 0.2 square meters, 0.25 square meters, 0.3 square meters, 0.35 square meters, 0.4 square meters, 0.45 square meters, or 0.5 square meters. A larger total light-emitting area allows more luminous flux (lumens) radiated by the light-emitting portion 510 to be distributed over a broader region. The luminous flux (lumens) determines the brightness and illumination effect of the illumination device 500. The larger light-emitting area allows more luminous flux to be distributed over the broader region.

The total rated power of the illumination device 500 ranges from 1 W to 3 W, such as 1 W, 2 W, or 3 W. The relationship between the total rated power and the lumens is mainly reflected in that higher power generally results in a higher lumen value. Thus, brighter light is provided. The illumination device 500 includes the battery set 520. The capacity of the battery set 520 ranges from 5 Ah to 15 Ah, such as 5 Ah, 6 Ah, 7 Ah, 8 Ah, 9 Ah, 10 Ah, 11 Ah, 12 Ah, 13 Ah, 14 Ah, or 15 Ah. The capacity of the battery pack 520 affects a battery lifetime, so the capacity of the battery pack 520 is selected based on a required battery lifetime. The maximum battery lifetime of the illumination device 500 ranges from 1 hour to 6 hours, such as 1 hour, 1.5 hours, 2 hours, 2.5 hours, 3 hours, 3.5 hours, 4 hours, 4.5 hours, 5 hours, 5.5 hours, or 6 hours, and is set as required. In some examples, when a battery set 520 with a capacity of 5 Ah to 10 Ah powers the light-emitting portion 510, the light-emitting portion 510 outputs about 300 to 1000 lumens of light continuously for approximately 2.5 hours.

The inflator 10 further includes an operation member 600 for adjusting the state of the light-emitting portion 510. The operation member 600 is operated as required so that the light-emitting portion 510 presents different states. In some examples, the states of the light-emitting portion 510 include the luminous flux and the color temperature, which each have multiple states. In an example, the states of the luminous flux correspond to the states of the color temperature one to one. The luminous flux and the color temperature are simultaneously adjusted through the operation member 600. Moreover, the states of the luminous flux, the states of the color temperature, and the states of the operation member 600 are in a one-to-one correspondence for convenience of adjustment. In another example, one state of the luminous flux corresponds to multiple states of the color temperature, and similarly, one state of the color temperature corresponds to multiple states of the luminous flux. Thus, the luminous flux and the color temperature are adjusted through the operation member 600 separately so that the light-emitting portion 510 presents more states.

When the illumination device 500 is used independently, the adjustment is performed through the brightness adjustment portion 550 and the color temperature adjustment portion 560. When the illumination device 500 is applied to the inflator 10, the adjustment may be performed through either the operation member 600 or the brightness adjustment portion 550 and the color temperature adjustment portion 560.

The illumination device 500 is detachably mounted on the main housing 100, facilitating maintenance and replacement. The illumination device 500 can be optionally selected as required. For example, when the illumination device 500 becomes unusable, the illumination device 500 is replaced, thereby avoiding affecting the use of the inflator 10. The illumination device 500 is detached so that the inflator 10 can be more conveniently transported and stored. After being detached, the illumination device 500 can be independently used in other scenarios such as emergency rescue, construction sites, and outdoor activities. Thus, the illumination device 500 can be used in more scenarios, thereby improving the applicability and flexibility of the illumination device 500. When the illumination device 500 is applied to the inflator 10, the battery pack can provide a charging current for the battery set 520 so that the light emission duration of the illumination device 500 is ensured.

This example further provides an inflator system. The inflator system includes a motor, a power mechanism driven by the motor to generate airflow, a power supply device configured to provide a power supply for the motor, and an illumination device 500. The power supply device may be a lithium-ion battery or a solar cell. The illumination device 500 includes a light-emitting portion 510 configured to illuminate a working region of the inflator 10. The light emitted by the illumination device 500 has a first color temperature and a second color temperature. The first color temperature is different from the second color temperature. Light sources with different color temperatures provide different visual and psychological effects. An appropriate color temperature may be selected according to a usage scenario. When the inflator 10 is used at night or at a poorly illuminated place, the illumination device 500 provides illumination so that it is convenient to operate the inflator 10 to work. Moreover, the color temperature is selected as required, that is, the first color temperature or the second color temperature is selected, which further provides more scenarios in which the inflator 10 can be used, enhances the applicability of the inflator 10, and avoids the limitations on the usage scenarios.

Light in a warm tone (with a low color temperature such as 2700 K to 3500 K) makes people feel warm. Neutral light (with a color temperature between 3500 K and 5000 K) is soft and approximates to natural light, so the neutral light is suitable for an illumination place requiring brightness and comfort. Therefore, the adjustment range of the color temperature is 2500 K to 4500 K, for example, selectable endpoint values of the color temperature include 2500 K, 3000 K, 3500 K, 4000 K, and 5000 K. For example, the adjustment range of the first color temperature is 2500 K to 3500 K, and the adjustment range of the second color temperature is 3500 K to 5000 K. The color temperature is adapted to an external environment. When the ambient temperature is relatively low, the color temperature for the warm tone is selected, and when the ambient temperature is relatively high, the color temperature for the neutral light is selected.

The color temperature is configured to be adjustable adaptively. For example, the illumination device 500 is provided with a temperature sensor. When the ambient temperature of the outside reaches a preset value, the first color temperature is used. Otherwise, the second color temperature is used. Alternatively, the inflator system further includes an operation member 600. The operation member 600 is configured to be capable of adjusting the color temperature, and the first color temperature or the second color temperature is selected manually as required.

As shown in FIGS. 1 to 5, this example further provides an inflator system. The inflator system includes an inflator 10, a power supply device, and an illumination device 500. The inflator 10 includes a motor and a power mechanism driven by the motor to generate airflow. The power supply device is configured to provide a power supply for the motor. The illumination device 500 includes a light-emitting portion 510. The light-emitting portion 510 may be a light-emitting element, for example, an LED lamp, an incandescent lamp, or a fluorescent lamp. The light-emitting portion 510 is configured to illuminate a working region of the inflator 10. The inflator 10 has a first coupling portion 120 configured to detachably connect the illumination device 500. The illumination device 500 further includes a rechargeable battery set 520. The battery set 520 is capable of providing electrical energy for the light-emitting portion 510 when the illumination device 500 is in a mounted state or a detached state. The illumination device 500 is an independent structure and may be used either in conjunction with the inflator 10 or independently. Thus, the illumination device 500 can be used in more scenarios. When used in conjunction with the inflator 10, the illumination device 500 is mounted to the inflator 10 through the first coupling portion 120, thereby ensuring the mounting reliability and enabling the inflator 10 to work in a dark environment with insufficient light. The power supply device may be a battery pack. The power supply device can provide a charging current for the battery set 520 of the illumination device 500, thereby prolonging usage duration of the illumination device 500. The power supply device is a battery pack.

As shown in FIGS. 1 to 5, this example further provides an illumination device 500 adapted to work of an inflator 10. The inflator 10 includes a power supply device, a first interface 121, a motor, and a power mechanism driven by the motor to generate airflow. The power supply device is configured to provide a power supply for the motor. The first interface 121 is adapted to the illumination device 500. The illumination device 500 includes a second interface, a light-emitting portion 510, and a battery set 520 for powering the light-emitting portion 510. The light-emitting portion 510 is configured to illuminate a working region of the inflator 10 so that the inflator 10 can be used in a poorly illuminated place and can be used in more scenarios. The second interface is adapted to the inflator 10. The first interface 121 and the second interface are capable of being electrically connected to each other to allow a current to flow from the first interface 121 to the second interface. The power supply device powers the inflator 10 and the illumination device 500 simultaneously, ensuring usage duration of the illumination device 500. The power supply device is a battery pack or the like. The illumination device 500 is detachably connected to the inflator 10 or may be used independently. The illumination device 500 is convenient to replace and more flexible to use. The light-emitting portion 510 is a light-emitting element, for example, an LED lamp, an incandescent lamp, or a fluorescent lamp.

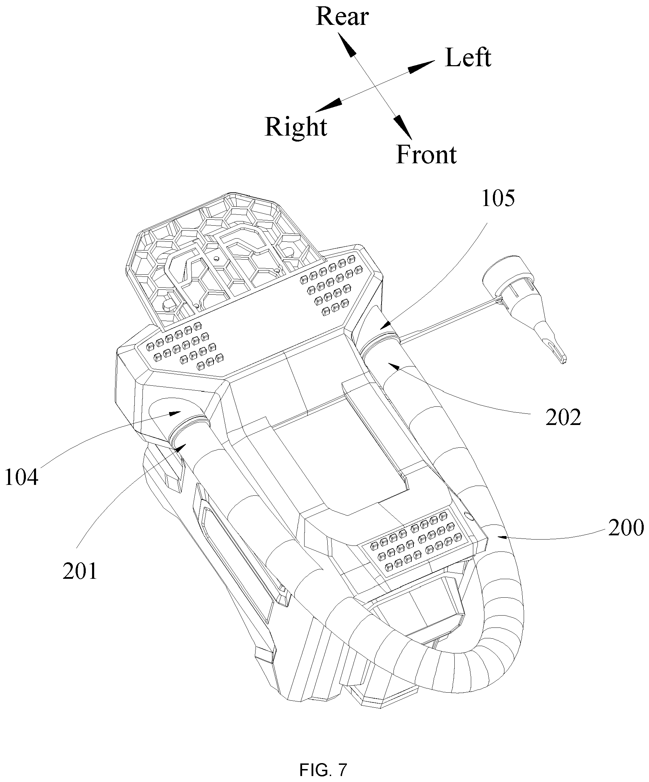

In some examples, referring to FIG. 7, the flexible duct 200 has a first port 201 and a second port 202. The first port 201 can communicate with a first connection port 104 of the main housing 100, and the second port 202 can communicate with a second connection port 105 of the main housing 100. When the inflator 10 works in a low-pressure mode to perform inflation, the first port 201 may be detached from the first connection port 104 and connected to the air vent 300 for the inflation. When the inflator 10 works in the low-pressure mode to perform deflation, the second port 202 may be detached from the second connection port 105 and connected to the air vent 300 for the deflation. This design can simplify the process of switching an operation mode, facilitates the user's operation, and eliminates the need for an additional storage structure for storing the flexible duct 200.

As shown in FIGS. 1 and 7, one end of the flexible duct 200 is connected to the first connection port 104, and the flexible duct 200 is wound from the right side of the inflator 10 to the left side of the inflator 10 via the front side of the inflator 10 and is connected to the second connection port 105.

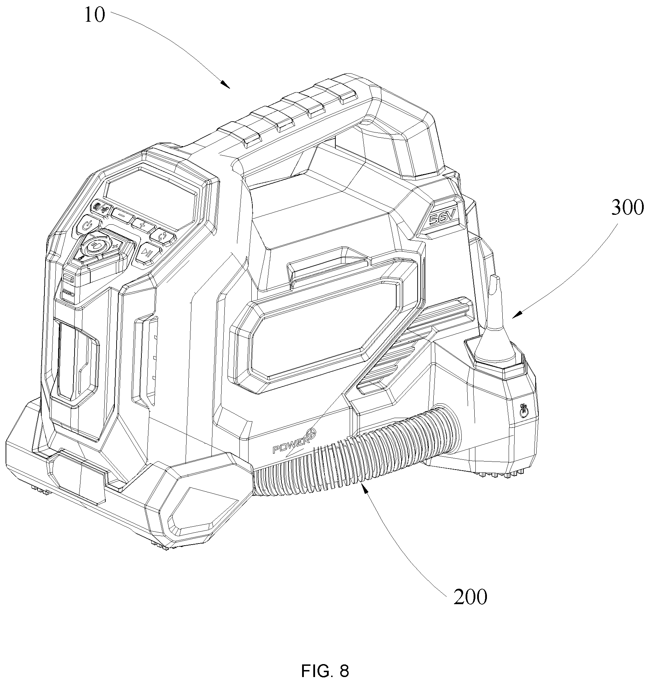

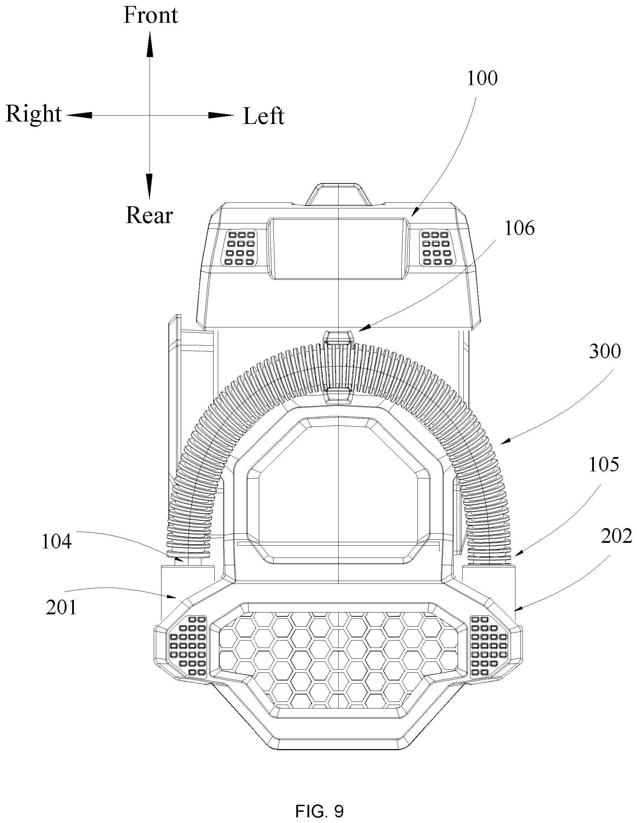

FIGS. 8 and 9 illustrate the inflator 10 in the example of the present application, where the inflator 10 includes the flexible duct 200. The flexible duct 200 has the first port 201 and the second port 202. The first port 201 can communicate with the first connection port 104 of the main housing 100, and the second port 202 can communicate with the second connection port 105 of the main housing 100. When the inflator 10 works in the low-pressure mode to perform the inflation, the first port 201 may be detached from the first connection port 104 and connected to the air vent 300 for the inflation. When the inflator 10 works in the low-pressure mode to perform the deflation, the second port 202 may be detached from the second connection port 105 and connected to the air vent 300 for the deflation. The bottom of the inflator 10 further includes a limit portion 106 for fixing the flexible duct 200. The flexible duct 200 is partially arranged at the bottom of the inflator 10, extends from the bottom to the left and right sides of the inflator 10, respectively, and is connected to the first connection port 104 and the second connection port 105. In this manner, the flexible duct 200 is reasonably arranged so that the entire machine has a more compact structure. On the other hand, when the user uses the inflator 10, only the required end needs to be detached and connected to the corresponding air vent 300. Compared with an inflator in the related art, where the user needs to remove a flexible hose from a storage structure and then inserts the flexible hose into a required connection port, the technical solution of the present application provides more convenient operation. In some examples, as shown in FIG. 8, the air vent 300 may be stored on a reserved structure on the main housing 100. In some examples, as shown in FIG. 1, the air vent 300 may be flexibly connected to the flexible duct 200.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. An inflator (10), comprising:
a motor (101b);
a power mechanism driven by the motor and configured to generate airflow;
at least one air vent (300) connected to a flexible duct (200) for air intake and/or air discharge to allow the airflow to flow; and
a main housing (100), accommodating the motor and the power mechanism, and having a battery coupling portion capable of being detached or mounted with a battery pack that provides a power supply for the motor;
wherein the main housing further has a first coupling portion (120) configured to detachably connect an illumination device (500); and the illumination device is capable of illuminating a working region of the inflator.

2. The inflator according to claim 1, wherein the illumination device comprises a light-emitting portion (510) and a battery set (520) for powering the light-emitting portion.

3. The inflator according to claim 2, wherein the first coupling portion comprises a first interface (121), the illumination device comprises a second interface, and the battery pack charges the battery set of the illumination device through the first interface and the second interface.

4. The inflator according to claim 3, wherein a current transmission manner between the first interface and the second interface is one of a Type-C interface, a universal serial bus (USB) interface, contact charging, or wireless charging.

5. The inflator according to claim 1, wherein the first coupling portion further comprises an adaptation portion (122) configured to lock the illumination device onto the inflator.

6. The inflator according to claim 1, wherein the illumination device is configured to be capable of outputting 300 or more lumens of light.

7. The inflator according to claim 1, wherein the illumination device further comprises a display region configured to indicate a state of charge and/or a working state and/or a charging state of the illumination device.

8. The inflator according to claim 1, wherein the illumination device has a stepless brightness adjustment function.

9. The inflator according to claim 1, wherein the illumination device has a color temperature adjustment function.

10. The inflator according to claim 1, wherein the inflator has a low-pressure working mode and a high-pressure working mode.

11. The inflator according to claim 10, wherein the power mechanism comprises a compression mechanism (102b), wherein the compression mechanism works when the inflator is in the high-pressure working mode.

12. The inflator according to claim 10, wherein the power mechanism comprises a rotation mechanism (102b), wherein the rotation mechanism works when the inflator is in the low-pressure working mode.

13. The inflator according to claim 10, further comprising an operation portion (130) disposed on the main housing, wherein the operation portion is configured to be capable of adjusting a working mode of the inflator.

14. The inflator according to claim 1, wherein the illumination device further comprises a magnetically attractive portion having a magnetic property.

15. The inflator according to claim 1, wherein the illumination device and the battery pack are disposed at two end portions of the main housing, respectively.
